# EUROPÄISCHE PATENTSCHRIFT

(11) **EP 0 377 884 B1**
(45) Veröffentlichungstag und Bekanntmachung des Hinweises auf die Patenterteilung: **03.03.1993**
(21) Anmeldenummer: 89123762.0
(22) Anmeldetag: 22.12.1989
(51) Int. Cl.: B65G 15/30, B65G 23/06

(54) **Verfahren und Vorrichtung zum Transport von Gütern**
Method and device for transporting goods
Méthode et dispositif pour transporter des marchandises

(30) Priorität: 07.01.1989 DE 3900341
(43) Veröffentlichungstag der Anmeldung: 18.07.1990
(73) Patentinhaber: FREDENHAGEN KG, D-63069 Offenbach (DE)
(72) Erfinder: Knuettel, Werner, D-6451 Grosskrotzenburg (DE)
(74) Vertreter: Stoffregen, Hans-Herbert, Dr. Dipl.-Phys.

(56) Entgegenhaltungen:
- DE-A- 2 156 030
- DE-A- 2 740 807
- DE-A- 3 019 916
- DE-B- 2 032 584
- GB-A- 1 536 289
- US-A- 3 917 092

## Beschreibung

Die Erfindung bezieht sich auf ein Verfahren zum Transport von Gütern mittels eines Gurtbandförderers, umfassend Antriebs- und Spanntrommel sowie Tragrollen und mit diesen wechselwirkendes Zahnriemenband mit in dessen Randbereichen verlaufenden Verzahnungen, die ihrerseits zueinander beabstandet sind, wobei das Zahnriemenband unterseitig zwischen den Verzahnungen eben ausgebildet ist. Ferner bezieht sich die Erfindung auf eine Vorrichtung insbesondere zur Durchführung des Verfahrens.

Bei einem Gurtbandförderer können auf einem Traggerüst aus z.B. Profilstahl oder Rohr Tragrollen befestigt werden, über die ein Fördergurt aus Gummi oder Kunststoff mit zugfesten Einlagen gezogen wird. Das Obertrum wird für Stückgut wie z.B. Kraftfahrzeugteile oder Automobilkarosserien flach geführt. Am Heck und am Kopf des Förderers wird der Gurt über Gurttrommeln umgelenkt. Ferner wird das Band über Antriebstrommeln reibend bewegt und durch eine Bandspanneinrichtung vorgespannt.

Entsprechende Gurtbandförderer können als Alternativen zu Kettenförderern eingesetzt werden. Letztere zeigen aufgrund des Polygon-Effekts den Nachteil, daß die Geschwindigkeit maximal in der Größenordnung bis 30 m/min liegen kann. Mit Gurtbandförderern lassen sich dagegen bei weitem höhere Geschwindigkeiten erzielen.

Um einen Gleichlauf und eine präzise Positionierung des Gurtbandes zu ermöglichen, können diese als Zahnriemenband ausgebildet sein, die unterseitig eine Verzahnung aufweisen, die nach dem Stand der Technik mit einer an den Antriebstrommeln bzw. Spannrollen und Abtragsrollen vorhandenen Verzahnung formschlüssig zusammenwirken. Entsprechend ausgebildete Gurtbandförderer ermöglichen Geschwindigkeiten in der Größenordnung bis 120 m/min und Beschleunigungen in der Größenordnung 1,5 m/sec².

Bei diesen hohen Geschwindigkeiten bzw. Beschleunigungen hat sich herausgestellt, daß bei der Abtragung hoher Lasten störende Geräusche auftreten, die einen Betrieb nicht zumutbar werden lassen. Ferner treten bei hohen Geschwindigkeiten Schwingungen des Zahnriemenbandes in einer Weise auf, daß Güter mit Gewichten in der Größenordnung von Tonnen auf den Zahnriemenbändern verrutschen können. Hierdurch ist eine präzise Positionierung des zu fördernden Gutes insbesondere bei automatischen Produktionsabläufen nicht mehr gewährleistet.

Der DE 30 19 916 Al ist ein Gurtbandförderer mit Antriebs- und Spannrolle, jedoch ohne Tragrollen zu entnehmen. Das über Antriebs- und Spannrolle geführte Zahnriemenband weist in seinen Randbereichen Verzahnungen auf. Um Güter zu transportieren, sind auf der Oberseite des Zahnriemenbandes an die Außengeomtrie der Güter angepaßte Aussparungen vorhanden. Hierdurch ergibt sich der Nachteil, daß Gegenstände mit voneinander abweichenden Geometrien nacheinander nicht transportiert werden können.

Der DE 27 40 807 Al ist ein Bandförderer zu entnehmen, der insbesondere zur Förderung von Gütern längs einer Kurve bestimmt ist. Ein hierzu verwendetes Förderband weist zumindest längs einer Kante eine endlose Verdickung in Form einer flexiblen Zahnstange auf, die der Tragfläche des Förderbandes gegenüberliegt. Um das Förderband umzulenken, sind stationäre zylindrische Umlenkführungen vorhanden, die selbst die Funktion von Spannrollen nicht ausüben müssen.

Aufgabe der vorliegenden Erfindung ist es, ein Verfahren und eine Vorrichtung der eingangs beschriebenen Art so weiterzubilden, daß das Fördergut mit hohen Geschwindigkeiten transportiert werden bzw. hohe Beschleunigungen erfahren kann, ohne daß störende Geräusche auftreten oder das Zahnriemenband derart in Schwingung gerät, wodurch ein Verrutschen des Fördergutes erfolgen könnte.

Die Aufgabe wird durch ein Verfahren gelöst, das sich dadurch auszeichnet, daß die Güter ausschließlich auf dem zwischen den Verzahnungen vorhandenen, bandunterseitig flach ausgebildeten Bereich des Zahnriemenbandes abgestützt werden. Im Vergleich zum Stand der Technik wird folglich nicht mehr die gesamte Bandbreite als lastabtragende Fläche benutzt, sondern ausschließlich der Bereich, der nicht mit den Antriebs- und Spanntrommeln bzw. den Tragrollen formschlüssig zusammenwirkt.

In weiterer hervorzuhebender Ausgestaltung ist vorgesehen, daß die Verzahnung des Zahnriemenbandes ausschließlich mit der Antriebsrolle formschlüssig zusammenwirkt und daß die Verzahnung mit der Spanntrommel und den Tragrollen keinen Eingriff hat. Durch diese Maßnahme und insbesondere in Kombination mit der Abstützung des Förderguts ausschließlich in dem Bereich, in dem die Verzahnung nicht vorhanden ist, ist eine Förderung von Gütern mit hoher Geschwindigkeit bzw. Beschleunigung möglich, ohne daß störende Geräusche auftreten bzw. das Zahnriemenband in Schwingung gerät. Mit dem erfindungsgemäßen Verfahren transportierte Güter können folglich mit hoher Präzision und Geschwindigkeit z.B. Bearbeitungsstationen zugeführt werden, ohne daß eine Nachregulierung bzw. Überprüfung der Position erforderlich ist. Demzufolge ist ein problemloser Einsatz in automatischen Bearbeitungsstraßen möglich.

Ein Gurtbandförderer, umfassend Antriebs- und Spanntrommeln sowie Tragrollen und mit diesen wechselwirkendes Zahnriemenband mit in dessen Randbereichen verlaufender Verzahnungen, die ihrerseits zueinander beabstandet sind, wobei die Unterseite des Zahnriemenbandes in diesem Bereich eben ausgebildet ist, zeichnet sich dadurch aus, daß die Lastabtragung in dem Bereich des Zahnriemenbandes erfolgt, der zwischen den in den Randbereichen vorhandenen Verzahnungen verläuft.

In Abweichung von den bekannten Zahnriemenbändern verläuft der lasttragende Bereich ausschließlich außerhalb der Verzahnung, wobei die Unterseite des Bandes in diesem Bereich eben ausgebildet ist. Nach dem Stand der Technik befinden sich in diesem Bereich keilförmige Erhebungen, die als Bandführung dienen. Durch die erfindungsgemäßen Maßnahmen ist sichergestellt, daß der Gurtbandförderer mit hohen Geschwindigkeiten betrieben werden kann, ohne daß störende Geräusche oder Schwingungen auftreten.

In Ausgestaltung der Erfindung ist vorgesehen, daß der flache Bereich mit der Spanntrommel und den Trabrollen wechselwirkt, wohingegen die Verzahnung zu diesen beabstandet ist. Durch diese Maßnahmen erfolgt ergänzend eine Geräuschminderung bzw. Schwingungsreduzierung. Der Antrieb des Zahnriemenbandes erfolgt ferner ausschließlich durch Wechselwirken der Verzahnungen von Zahnriemenband und Antriebsrolle.

Weiterhin kann vorgesehen werden, daß die Antriebstrommel aus zwei Zahnscheiben und einem die Auflage für den ebenen Teil des Zahnriemenbandes bildenden Hohlzylinder zusammengesetzt ist, der vorzugsweise austauschbar zwischen den Zahnscheiben angeordnet ist. Durch diese Maßnahmen ergibt sich der Vorteil, daß für Zahnriemenbänder unterschiedlicher Breiten gleiche Zahnscheiben benutzt werden können, wobei einzig und allein der Hohlzylinder ausgetauscht werden muß, damit dessen Breite an die des ebenen Teils des Zahnriemenbandes angepaßt ist. Ferner ist vorgesehen, daß sich die Antriebstrommel und/oder die Tragrollen aus zwei äußeren Scheiben und einem von diesen austauschbar aufgenommenen Zylinderelement zusammensetzen, wobei der äußere Durchmesser des Zylinderelementes den einer jeden Scheibe in zumindest einem Umfang überragt, der größer als die Zahnhöhe des Zahnriemenbandes ist.

Einzelheiten und, Vorteile der Erfindung ergeben sich nicht nur aus den Ansprüchen, den diesen zu entnehmenden Merkmalen, sondern auch aus der nachfolgenden Beschreibung eines in der Zeichnung dargestellten bevorzugten Ausführungsbeispiels.

Es zeigen:
Fig. 1 eine rein schematische Darstellung einer aus Gurtbandförderern zusammengesetzten Förderstrecke,
Fig. 2 eine Schnittdarstellung eines Zahnriemenbandes,
Fig. 3 eine Unteransicht des Zahnriemenbandes nach Fig. 2,
Fig. 4 eine Detaildarstellung einer Antriebsrolle und
Fig. 5 eine Detaildarstellung einer Trag- oder Stützrolle.

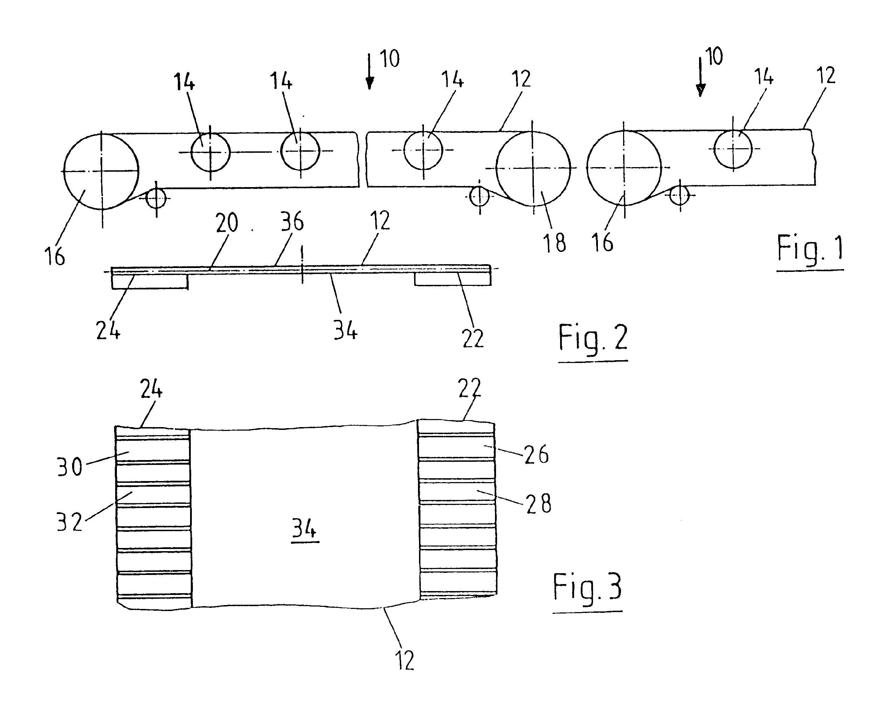

In Fig. 1 ist ein Ausschnitt einer Förderstraße dargestellt, die sich aus in Reihe angeordneten Gurtbandförderern ( 10) zusammensetzt, mit Hilfe derer nicht dargestellte Fördergüter wie z.B. Automobilteile oder Karosserien auch auf Transportrahmen transportiert werden sollen. Jeder Gurtbandförderer umfaßt ein endloses Zahnriemenband ( 12), das über Trag- oder Stützrollen (14) sowie um eine Antriebstrommel oder Antriebsrad (16) und eine Spannrolle bzw. ein Spannrad (18) geführt wird. Bei dem Gurtband (12) handelt es sich erwähntermaßen um ein Zahnriemenband, das in den Fig. 2 und 3 zur Erläuterung der einzelnenen Merkmale dargestellt ist. Das Zahnriemenband ( 12) kann z.B. aus Polyurethan mit Stahlkordeinlagen (20) bestehen und weist unterseitig in den Randbereichen (22) und (24) eine Profilierung wie Verzahnung auf, die im Schnitt eine Trapezform aufweisen kann. Die einzelnen Zähne sind in Fig. 3 beispielhaft mit den Bezugszeichen (26), (28), (30) und (32) bezeichnet. Zwischen den die Verzahnungen aufweisenden Randbereichen (22) und (24) erstreckt sich ein flacher, also Erhebungen nicht aufweisender Bereich (34), über den ausschließlich die Lasten abgetragen werden.

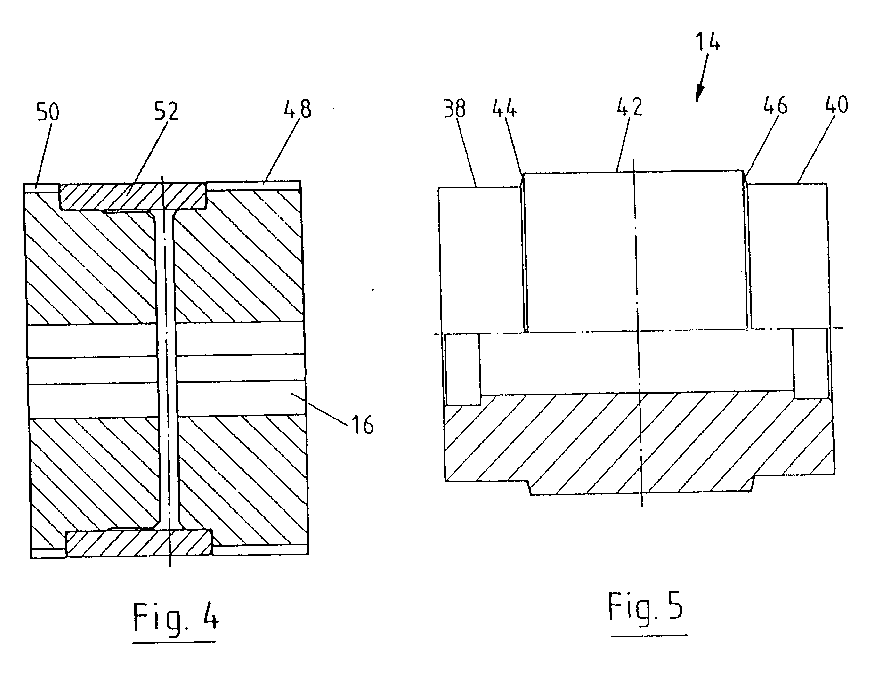

Abweichend zum Stand der Technik wirkt ausschließlich der Bereich (34), also derjenige, der eine Verzahnung nicht aufweist, des Zahnriemenbandes (12) mit den Tragrollen (14) sowie den Spanntrommeln (18) zusammen. Dies bedeutet, daß die Verzahnung im Abstand zu den entsprechenden Oberflächen der Rollen (14) und (18) verläuft. Dies wird auch an Hand der Fig. 5 verdeutlicht, in der rein schematisch eine Stütz- oder Tragrolle (14) dargestellt ist. Diese besteht aus zwei äußeren eine glatte Oberfläche aufweisenden Scheiben (38) und (40), zwischen denen gegebenenfalls austauschbar eine Scheibe (42) ebenfalls mit glatter Oberfläche angeordnet ist. Dabei dient die Oberfläche der Scheibe (42) als Auflagefläche für den Bereich (34) des Zahnriemenbandes (12). Die Differenz zwischen den Durchmessern der mittleren Scheibe (42) zu den der äußeren Scheiben (38) und (40) ist dabei so gewählt, daß die Verzahnung (26), (28), (30) und (32) nicht mit den äußeren Scheiben (38) und (40) in Berührung kommen kann. Eine Führung des Zahnriemenbandes (12) kann durch die zwischen den Scheiben (40) und (42) bzw. (38) und (42) ausgebildete Stufe (44) und (46) erfolgen, die mit den inneren Stirnflächen der Verzahnungen (26), (28), (30) und (32) wechselwirken können. Selbstverständlich ist es nicht erforderlich, daß die Tragrollen (14) bzw. die Spannrolle (18) mehrteilig ausgebildet ist. Vielmehr kann auch ein Vollteil mit der der Fig. 5 zu entnehmenden Geometrie vorliegen.

Treten die Tragrollen (14) bzw. die Spanntrommel (18) ausschließlich mit dem Bereich (34) des Zahnriemenbandes (12) in Wechselwirkung, so gelangt die Verzahnung (26), (28), (30) und (32) mit entsprechend ausgebildeten Zahnkränzen (48) und (50) der Antriebstrommel (16) in Eingriff. Die Zahnkränze oder Zahnscheiben (48) und (50) nehmen gemäß Fig. 4 ein Hohlzylinderelement (52) auf, dessen freie Oberfläche mit dem Bereich (34) des Zahnriemenbandes (12) wechselwirkt. Durch eine entsprechende Ausgestaltung der Antriebstrommel (16) erfolgt ein schlupffreier Antrieb, wobei die Fördergeschwindigkeiten in der Größenordnung von 120 m/min bei Beschleunigungen in der Größenordnung von 1,5 m/sec² erzielbar sind. Die Antriebstrommeln von aufeinanderfolgenden Gurtförderbändern (10) können dabei einen gemeinsamen Antrieb aufweisen, um eine stetige Übergabe zu ermöglichen.

Wie an Hand der Fig. 4 des weiteren verdeutlicht werden soll, ist der Hohlzylinderabschnitt (52) austauschbar von den Zahnscheiben (48) und (50) aufgenommen. Nicht näher bezeichnete Stufen dienen als Abstützung. Durch die Austauschbarkeit ergibt sich der Vorteil, daß bei unveränderten Zahnscheiben (48) und (50) die Hohlzylindereinsätze (52) verschiedene Abmessungen aufweisen können, so daß problemlos ein Einsatz für Zahnriemenbänder unterschiedlicher Breiten möglich ist.

Auch erkennt man, daß die wirksame Breite der Verzahnung der Zahnscheiben (48) und (50) unterschiedlich breit gewählt ist, um z.B. auch Zahnriemenbänder mit einer asymmetrischen Ausbildung der Verzahnungen (26), (28) bzw. (30), (32) formschlüssig aufzunehmen. Letzteres bedeutet, daß z.B. die Breite B die Verzahnung (26) und (28) von der Breite C der Verzahnung (30), (32) abweicht.

## Patentansprüche

1. Verfahren zum Transport von Gütern mittels eines Gurtbandförderers (10), umfassend Antriebs- und Spanntrommel (16, 18) sowie Tragrollen (14) und mit diesen wechselwirkendes Zahnriemenband (12) mit in dessen Randbereichen (22, 24) verlaufenden Verzahnungen (26, 28, 30, 32), die ihrerseits zueinander beabstandet sind, wobei das Zahnriemenband (12)′ unterseitig zwischen den Verzahnungen (26,28,30,32) flach ausgebildet ist,
**dadurch gekennzeichnet**,
daß die Güter ausschließlich auf dem zwischen den Verzahnungen (26, 28, 30, 32) vorhandenen bandunterseitig flach ausgebildeten Bereich des Zahnriemenbandes (12) abgestützt werden.

2. Verfahren nach Anspruch 1,
**dadurch gekennzeichnet**,
daß die Verzahnung (26, 28, 30, 32) des Zahnriemenbandes (12) ausschließlich mit der Antriebsrolle (16) formschlüssig zusammenwirkt und daß die Verzahnung mit der Spanntrommel (18) und den Tragrollen (14) keinen Eingriff hat.

3. Gurtbandförderer (10), umfassend Antriebs- und Spanntrommel ( 16, 18) sowie Tragrollen (14) und mit diesen wechselwirkendes Zahnriemenband (12) mit in dessen Randbereichen (22, 24) verlaufenden Verzahnungen (26, 28, 30, 32), die ihrerseits zueinander beabstandet sind, wobei die Unterseite des Zahnriemenbandes in dem Bereich zwischen den Verzahnungen (26, 28, 30, 32) flach ausgebildet ist,
**dadurch gekennzeichnet,**
daß die Lastabtragung in dem Bereich (34, 36) des Zahnriemenbandes (12) erfolgt, der zwischen den in den Randbereichen (22, 24) vorhandenen Verzahnungen (26, 28, 30, 32) verläuft.

## Claims

1. A method for transporting goods by means of a belt conveyor (10), comprising drive and tensioning drums (16, 18), support rollers (14) and a toothed belt (12) cooperating therewith and having toothings (26, 28, 30, 32), which extend in the edge regions (22, 24) of said toothed belt and are spaced apart from one another, the toothed belt (12) being flat on its underside between the toothings (26, 28, 30, 32), characterised in that the goods are supported exclusively on the flat region of the toothed belt (12) provided between the toothings (26, 28, 30, 32).

2. A method according to claim 1, characterised in that the toothing (26, 28, 30, 32) of the toothed belt (12) cooperates in a positive-locking manner exclusively with the drive roller (16) and the toothing does not engage with the tensioning drum (18) and the support rollers (14).

3. A belt conveyor (10), comprising drive and tensioning drums (16, 18), support rollers (14) and a toothed belt (12) cooperating therewith and having toothings (26, 28, 30, 32), which extend in the edge regions (22, 24) of said toothed belt and are spaced apart from one another, the underside of the toothed belt (12) being flat in the region between the toothings (26, 28, 30, 32), characterised in that the load bearing is effected in the region (34, 36) of the toothed belt (12) which extends between the toothings (26, 28, 30, 32) provided in the edge regions (22, 24).

## Revendications

1. Méthode pour transporter des marchandises au moyen d'un transporteur à courroie (10), comprenant des tambours d'entraînement et de tension (16, 18) ainsi que des rouleaux de support (14) et avec une courroie crantée (12) coopérant avec ceux-ci et ayant, dans ses zones latérales (22, 24), des dentures (26, 28, 30, 32) situées à distance les unes des autres tandis que la courroie crantée (12) présente une face inférieure plane entre les dentures (26, 28, 30, 32), caractérisée en ce que les marchandises sont supportées exclusivement sur la zone de la courroie crantée (12) de forme plate et située entre les dentures (26, 28, 30, 32).

2. Méthode selon la revendication 1, caractérisée en ce que la denture (26, 28, 30, 32) de la courroie crantée (12) coopère géométriquement exclusivement avec le rouleau d'entraînement (16) et que la denture n'engrène pas avec le tambour de tension (18) et les rouleaux de support (14).

3. Transporteur à courroie (10) comprenant des tambours d'entraînement et de tension (16, 18) ainsi que des rouleaux de support (14) et une courroie crantée (12) coopérant avec ceux-ci ayant, dans ses zones latérales (22, 24), des dentures (26, 28, 30, 32) situées à une certaine distance les unes des autres tandis que la face inférieure de la courroie crantée a une forme plate dans la zone entre les dentures (26, 28, 30, 32), caractérisé en ce que le transport des charges a lieu dans la zone (34, 36) de la courroie crantée (12) qui est située entre les dentures (26, 28, 30, 32) existant dans les zones latérales (22, 24).
